Europäisches Patentamt

European Patent Office

Office européen des brevets

(11) Veröffentlichungsnummer: **0 389 997**
**A2**

(12) **EUROPÄISCHE PATENTANMELDUNG**

(21) Anmeldenummer: 90105608.5

(51) Int. Cl.⁵ **H02J 9/06**

(22) Anmeldetag: 24.03.90

(30) Priorität: 28.03.89 DE 3910039

(43) Veröffentlichungstag der Anmeldung:
03.10.90 Patentblatt 90/40

(84) Benannte Vertragsstaaten:
CH DE FR GB IT LI

(71) Anmelder: LEGRAND GmbH
Windmühlenweg 27
D-4770 Soest(DE)

(72) Erfinder: **Mauz, Erwin**
**An der Rosenau**
**D-4772 Bad Sassendorf(DE)**

(74) Vertreter: **Bierl, Richard, Dr. rer. nat.,**
**Dipl.-Phys.**
**Hauptstrasse 32/I**
**D-7218 Trossingen 1(DE)**

(54) Schaltungseinrichtung zur Ueberbrückung von Ausfällen einer ersten an ein Wechselstromnetz angeschlossenen Energiequelle für kontinuierlich unterbrechungsfreie Speisung von elektrischen bzw. elektronischen Analog- bzw. Digital-Uhrenschaltkreisen, insbesondere Schaltuhren.

(57) Bei einer Schaltungseinrichtung mit einer ersten Schaltungsgruppe (2), die an ein Wechselstromnetz (1, 1') angeschlossen ist und deren Ausgangskreis (7, 8) eine Gleichrichter-Anordnung (6) und einen Energiespeicher für eine erste Energiequelle (2') enthält, und für zwingend kontinuierlich mit Gleichstrom zu speisende elektrische bzw. elektronische Analog- bzw. Digital-Uhren-Schaltkreise (26) bestimmt ist, deren Stromversorgung aus der ersten Energiequelle (2') bei deren Ausfall durch eine zweite Energiequelle (14) aus einem zweiten Energiespeicher in einer zweiten Schaltungsgruppe ersetzt wird, besteht die Neuerung darin, daß die Schaltungsgruppe (23) zu drei parallelen Zweigen zusammengefaßt ist, deren erster Zweig mit einer Spannungs-Stabilisierungs-Einrichtung (9) bestückt ist, deren zweiter Zweig als erste Energiequelle einen Langzeit-Energiespeicher (15) großer Kapazität mit einem Widerstand (13) in Serie enthält und deren dritter Zweig durch einen Energiespeicher kleiner Kapazität (16) - Kurzzeitspeicher - gebildet wird, wobei der Uhren-Schaltkreis (26) parallel zu dieser Schaltungsgruppe (23) angeordnet, ein hochohmiges Anpassungs-Netzwerk (2a), bestehend aus Kondensator (3) und den Widerständen (4, 5), vorgesehen ist, so daß der Betrieb des Uhren-Schaltkreises (26) gegen einen Ausfall der ersten Energiequelle (2') durch deren Ersatz durch die zweite Energiequelle (14) gesichert ist.

## Schaltungseinrichtung zur Überbrückung von Ausfällen einer ersten an ein Wechselstromnetz angeschlossenen Energiequelle für kontinuierlich unterbrechungsfreie Speisung von elektrischen bzw. elektronischen Analog- bzw. Digital-Uhrenschaltkreisen insbesondere Schaltuhren

Die Erfindung geht aus von einer Schaltungseinrichtung mit den im Oberbegriff von Anspruch 1 angegebenen Merkmalen. Eine solche Schaltungseinrichtung ist aus der DE-PS 34 22 364 C2 bekannt.

Zur Überbrückung von Netzausfällen ist man bei elektrischen Regel- und Steuerungseinrichtungen, insbesondere Schaltuhren, auf eine Energiespeicherung angewiesen, damit Fehlschaltungen und Fehlfunktionen infolge von Ausfällen der in der Regel aus einem Wechselstromnetz angetriebenen Geräte, insbesondere zur Zeitsteuerung, sich nicht störend auswirken können. Für diesen Zweck ist der Einsatz von Energiespeichern, vor allem von Akkumulatoren entsprechend hoher Kapazität bekannt, die man während des Betriebs an der Energiequelle im Ladezustand halten kann.

Für eine Überbrückung von Netzausfällen hat sich auch schon der Einsatz einer NiCd-Batterie, im einfachsten Falle einer direkt parallel geschalteten NiCd-Zelle in gewissem Grade bewährt, weil sich damit durch solche Pufferung dank der flachen Entlade-Kennlinie von Akkus bei elektronischen oder elektro-mechanischen Uhren eine Spannungsstabilisierung, dh. dadurch bei solchen Uhren eine hohe Ganggenauigkeit einfach realisieren läßt. Nachteile haben sich jedoch - abgesehen von der Entsorgungs-Problematik der Umweltschäden wegen Cadmium - auch deswegen ergeben, weil ein Kurzschluß oder eine Unterbrechung des Akkus auftreten kann, der dann unweigerlich zum Betriebsausfall, zB. Stillstand einer Uhr oder sogar einer Bauteile-Zerstörung führt, wenn ein kapazitives Anpassungsnetzwerk ohne Spannungsbegrenzung eingesetzt wird.

Durch die DE-PS 34 22 364 C2 ist ein batteriebetriebenes Gerät mit einer Hauptbatterie und einer Reserve-Batterie für einen Trocken-Rasierapparat bekannt geworden, bei dem bei entladener Hauptbatterie diese auf Ladung geschaltet und der Verbraucher-Stromkreis auf die Reservebatterie geschaltet wird. Es ist davon ausgegangen - aber nicht zwingend -, daß die beiden Batterien aus einem gemeinsamen Lade-Netzteil wieder aufladbar sein sollen. Dazu ist eine Vorrichtung vorhanden, welche die Notwendigkeit der Wiederaufladung signalisiert, damit verhindert wird, daß die aufgeladene Hauptbatterie bei eingeschaltetem Reserveschalter die Reservebatterie ungewollt entlädt.

Bei der PCT-WO 88/02191 ist ein Netzgerät für eine Stromversorgung beschrieben, die eine erste und eine zweite Batterie umfaßt, die mit einer Stromquelle parallel zu einem Leistungssystem und die zweite Batterie durch die externe Energiequelle versorgt, wobei eine EMK erzeugt wird, die größer ist als die Spannung der primären Quelle. Es handelt sich also darum, daß die Spannung der eigentlichen Stromquelle durch Reduktion einer Ursprungsquelle mittels Spannungs-Spabilisation mit Zuverlässigkeit auf ihrer Höhe gehalten wird.

Bei dem Gegenstand der DE-OS 34 41 461 A1 arbeitet ein Reservestrom-Versorgungskreis zur Gewinnung eines Rücksetzsignals mit einem Rücksetz-Signalgenerator der einen Komparator und einen Differenzierkreis enthält. Die DE-OS 29 36 675 betrifft eine Notstrombatterie-Überwachungsschaltung, bei der ein Ladestrom-Meßgeber, der bei Fehlen des Batterie-Ladestroms ein Signal abgibt, das bei Unterschreiten der Batteriespannung unter einen Grenzwert über ein drittes Signal bei logischer Auswertung der anderen Werte ein Alarmsignal abgibt. Die vorstehend gewürdigten Patentschriften betreffen also den Funktionsbereich des Erfindungsgegenstandes nicht.

In der DE-OS 3o 45 445 A1 ist eine Schaltungsanordnung zur Strom- und Spannungsversorgung bei Netzausfall beschrieben, bei der ein Elektrolyt-Kondensator über eine Diode an eine Ladespannung gelegt wird, die höher als die erforderliche Ausgangsspannung und wobei parallel zum Elektrolyt-Kondensator ein kapazitiver Spannungswandler geschaltet ist, der durch Kaskadenschaltung vom Transistor die durch Ausfall fehlende Spannungsquelle ersetzt. Die beschriebene Schaltung betrifft also die Strom- und Spannungsversorgung mit einer möglichst gleichbleibenden Spannung und, soweit erkennbar, nicht den völligen Ersatz einer ausgefallenen Stromquelle.

Es ist eine sogenannte Gangregelschaltung bzw. Steuerungseinrichtung mit Sicherung gegen Netzausfall durch die DE-OS 2 3o9 598 bekannt, bei der ein Impulsgenerator als Ersatz-Energiequelle aus einem Akkumulator gespeist wird, die bei Ausfall der Netzspannung in Gang gesetzt wird, aber mit Hilfe einer Rückwirkungssteuerung dann außer Betrieb gesetzt wird, wenn die Netzspannung wieder vorhanden ist. Dies wird bewirkt, indem der Impulsgenerator, der aus dem Akkumulator, so lange die Netzspannung vorhanden ist, betrieben wird, gesperrt und erst dann, wenn die Netzspannung ausgefallen ist, freigegeben wird.

Die vorliegende Erfindung befaßt sich nicht nur mit den dort genannten, sondern vorwiegend mit den dort genannten, sondern vorwiegend mit den sonstigen in der Praxis zusätzlich auftretenden Störungsfaktoren. Zum einen kann es nämlich sein, daß der Akkumulator wegen langer Lagerung funktionsunfähig ist bzw. sich nach längerer Zeit der Nicht-Inanspruchnahme im tief-entladenen Zustand befindet und nach dem Einschalten - die Spannung am eigentlichen Verbraucher - nicht sofort in voller Höhe zur Verfügung steht und dabei zB. eine Schaltuhr erst nach einiger Zeit anläuft.

Ein anderer Störungsfall, der sich auch in dieser Weise auswirkt, wobei aber die Schaltuhr noch stehen bleibt, der aber eine andere Ursache hat, ist derjenige, daß im Akkumulator ein Kurzschluß auftritt oder vorliegt. Ein wiederum anderer Störungsfall besteht darin, daß der Akkumulator hochohmig ist oder wird, dh. die Eigenschaft Spannung zu glätten, verliert und somit die Spannung am eigentlichen Verbraucher überhöht ist; in diesem Falle können nachgeschaltete Bauteile, z.B. ein Mikroprozessor der Uhrenelektronik, zerstört werden oder mit Funktionsfehlern arbeiten.

Der Erfindung liegt die Aufgabe zugrunde, eine Schaltungseinrichtung der eingangs angegebenen Gattung mit einfachen schaltungs-technischem Aufwand derart weiterzubilden, daß bei Netzausfall ohne den Aufwand einer Umschaltungsmaßnahme die volle Funktion der hier betroffenen Geräte ohne Unterbrechung aufrechterhalten bleibt und die vorbeschriebenen Mängel vermieden werden. Das Prinzip der betreffenden Aufgabe soll sowohl für die Vermeidung von kurzzeitigen Unterbrechungen, als auch von längerem Netzausfall anwendbar sein. Dabei soll nach Möglichkeit eine Batterie als Ersatz-Energiequelle vermieden werden können, womit bei Netzausfall der Normalbetrieb mit Gangreserve-Bereitschaft ohne weiteres sichergestellt wird. Im Falle eines nicht-vermeidbaren Einsatzes einer Batterie als Ersatz-Energiequelle sollen drei Betriebsarten ohne Schaltungsänderung möglich sein, nämlich

a) Netzspannung vorhanden, Akku in Ordnung:
Normalbetrieb, Gangreserve-bereit

b) Netzausfall, Akku in Ordnung:
Normalbetrieb für begrenzte Zeitdauer, gleich Maximaldauer der Gangreserve

c) Netzspannung vorhanden, Akku defekt:
Normalbetrieb, jedoch ohne Gangreserve.

Dabei muß möglichst auch beachtet werden, daß Akkumulatoren eine temperaturabhängige Zellenkapazität haben, und daß die Batterie nicht kältefest ist.

Diese Aufgabe wird bei einer gattungsgemäßen Schaltungseinrichtung durch die kennzeichnenden Merkmale des Anspruchs 1 gelöst. Vorteilhafte Weiterbildungen sind in den Unteransprüchen angegeben.

Ausführungsbeispiele der Erfindung sind anhand der folgenden Beschreibung in Verbindung mit der Zeichnung erläutert; es stellen dar:

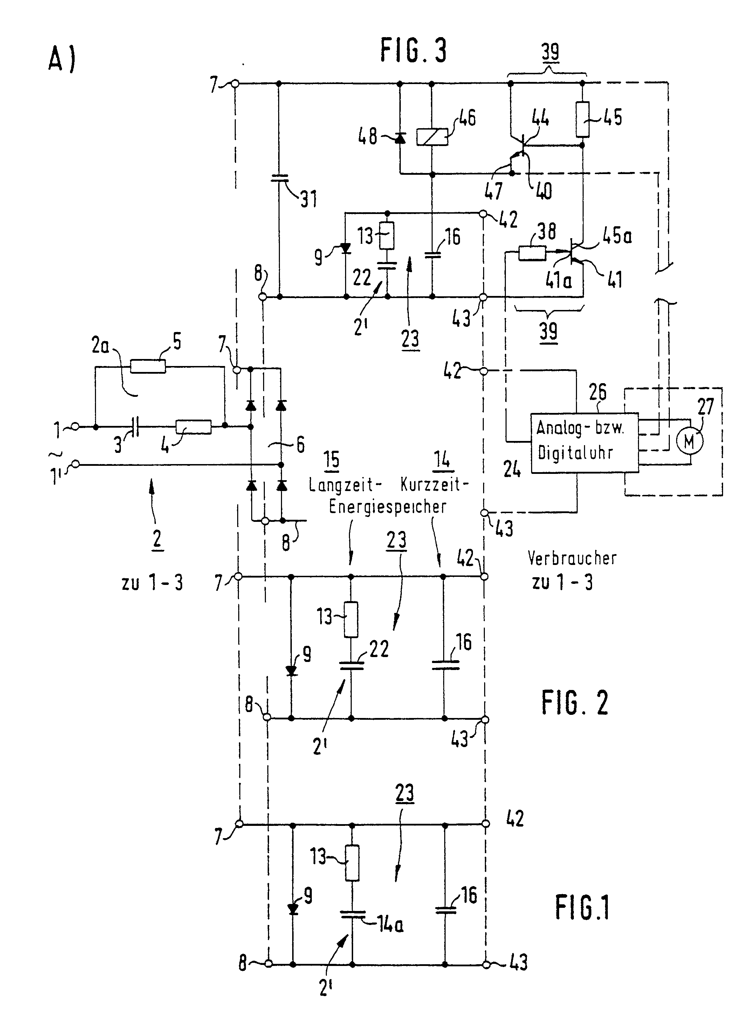

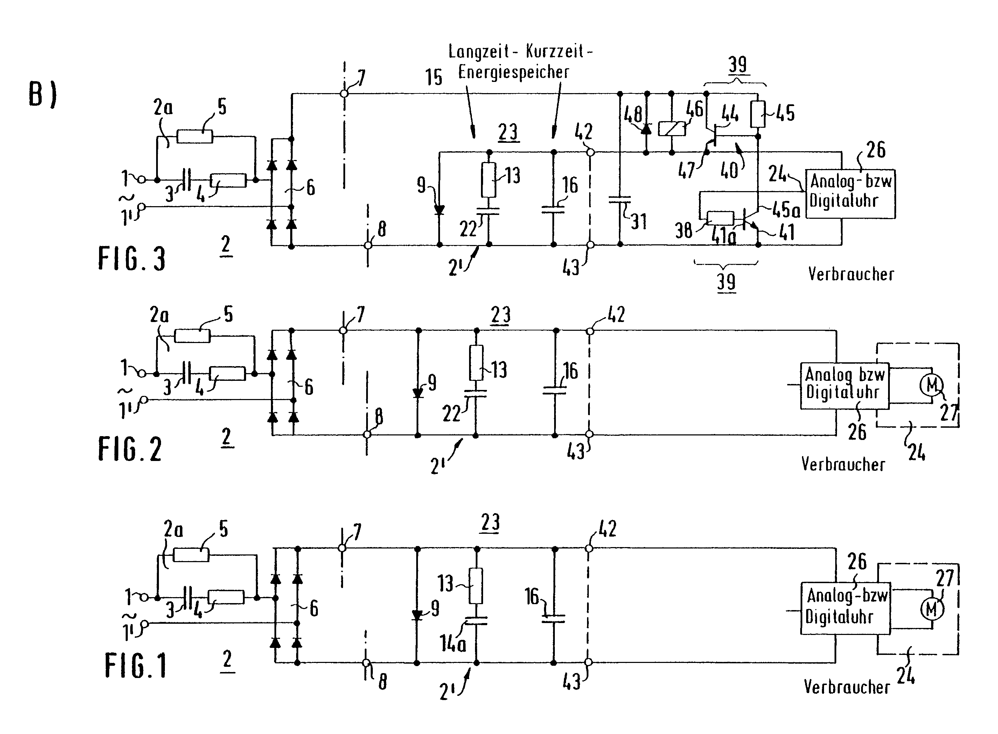

Fig. 1: Eine erste Variante der Schaltungseinrichtung mit einer eingangsseitigen Diode als Spannungsstabilisator und mit einem Kondensator von kleiner Kapazität in dem einen der beiden parallelen Pfade und der dazu parallel geschalteten Serienschaltung aus Vorwiderstand und Kondensator vergleichsweise großer Kapazität in dem anderen Pfad;

Fig. 2: eine zweite Variante mit einer Diode als Spannungsstabilisator im Eingang der Zusatzschaltung mit einem Kondensator vergleichsweise kleiner Kapazität in dem einen der parallel geschalteten Pfade und einer NiCd-Batterie von relativ hoher Kapazität in Serie mit einem Widerstand im anderen Pfad;

Fig. 3: eine dritte Variante mit einer Transistor-Serienschaltung im Anschluß an ein Anpassungs-Netzwerk im Eingang einer ersten Schaltungsgruppe mit einer Diode als Spannungsstabilisator und einer NiCd-Batterie von relativ großer Kapazität und einem Vorwiderstand im einen der beiden parallelen Zweige und einem Kondensator mit vergleichsweise kleiner Kapazität im anderen Pfad, sowie einem Relais-Schaltkreis in Serie mit diesen Parallel-Pfaden.

In Fig.1 ist an die Anschlußklemmen 1, 1' einer ersten Schaltungsgruppe 2 mit dem aus Serienschaltung von Kondensator 3 und Widerstand 4 mit Überbrückungs-Widerstand 5 gebildeten hochohmigen Anpassungsnetzwerk 2a, sowie einer Gleichrichter-Brücke 6 mit Ausgangskreisen 7, 8, die als eigentliche erste Energiequelle 2' dienende Schaltungsgruppe der Schaltungseinrichtung für kontinuierlich redundant unterbrechungsfreie Speisung von hier in Rede stehenden Verbrauchern angeschlossen. Im Eingang dieser Schaltungseinrichtung liegt als Spannungsstabilisator die Diode 9, an deren beiden Pole die Serienschaltung aus Vorwiderstand 13 und an Stelle der ersten Energiequelle 2' ein Speicher mit vergleichsweise großer Kapazität als Langzeitspeicher in dem einen der beiden parallelen Pfade und der Kondensator 16 von vergleichsweise kleiner Kapazität als Kurzzeit-Speicher, der andere der beiden parallelen Pfade mit den Ausgangs-Klemmen 42 und 43 für die Verbraucher, zB. einen Analog-bzw. Digital-Uhrenschaltkreis angeschlossen ist.

Die erste Energiequelle 2', an deren Stelle der Kondensator 14a großer Kapazität als Langzeit-Speicher 15 dient, wird langsam geladen und entladen, der Strom wird durch den Vorwiderstand 13 begrenzt. Der Kondensator 16 hat eine kleine Kapazität, er ist der Kurzzeit-Speicher und wird schnell geladen, so daß seine Spannung während der Aufladezeit des Kondensators 14 schnell zum Betrieb des nachgeschalteten Verbrauchers zur Verfügung steht, eine angeschlossene Uhr läuft also sofort an. Der hier eingesetzte Kondensator 16 ist mit einem zulässigen Arbeits-Temperaturbereich bemessen. der größer ist als derjenige einer NiCd-Zelle. Durch Dimensionierung der Kapazität des Kondensators 16 läßt sich die sichere Funktion des nachgeschalteten Verbrauchers an die Größe des Laststroms oder der Impulsbelastung, gegebenenfails durch einen Schrittmotor, anpassen. Dieser Kondensator 16 kann also bei gleichmäßiger Last mit kleinem Laststrom auch klein gemacht werden. zB. zu der Versorgung einer integrierten Schaltung.

Statt des dargestellten hochohmigen Anpassungsnetzwerks 2a mit Graetz-Brücke 6 kann auch eine andere Schaltung für den Anschluß an die primäre Energiequelle verwendet werden. Wesentlich ist jedoch, daß diese entsprechend dem hochohmigen Anpassungs-Netzwerk 2a einen großen Innenwiderstand besitzt. damit die angeschlossene Zusatzschaltung für den Verbraucherkreis mit weitgehend konstantem Strom betrieben wird.

Die zweite Variante der Fig.2 enthält in dem einen der beiden parallel geschalteten Pfade den Vorwiderstand 13 und die NiCd-Zelle 22 an der Stelle der ersten Energiequelle als Langzeit-Speicher in Serie geschaltet, in dem anderen der beiden Pfade den Kondensator 16 als Kurzzeit-Speicher. der an den Leistungsbedarf des Verbraucherkreises anpaßbar ist.

Bei dieser Schaltung gibt es zwei Betriebszustände, von denen der erste derjenige ist, in welchem der Akkumulator bzw. hier die NiCd-Batterie geladen wird, dh. bei tiefgeladenem Zustand die Spannung am Akkumulator erst nach einer gewissen Zeitkonstante entsprechend dem durch den Vorwiderstand 13 begrenzten Ladestrom zur Verfügung steht. Der Kondensator 16 hat dagegen quasi sofort nach dem Einschalten seine Spannung. dient also auch zur Pufferung von impulsförmigen Lastströmen, wie sie zB. zum Betrieb einer Analag-Quarzuhr durch den Schrittmotor-Betrieb entstehen.

Im anderen Betriebszustand, der dem Gangreserve-Fall entspricht. wird der Verbraucher, zB. der elektronische Analog- bzw. Digitaluhren-Schaltkreis 26 mit dem Ausgangssignal 24 des Uhrenschaltkreises bzw. dem Schrittmotor 27, aus dem NiCd-Akku über den zugehörigen Vorwiderstand beaufschlagt. Durch den Einsatz eines entsprechend ausgewählten temperatur-abhängigen Widerstandes besteht bei dieser Schaltung die Möglichkeit, den Ladestrom zu steuern.

In der vorbeschriebenen Schaltung nach Fig.2 sind bei anliegender Netzspannung zwei Störfälle möglich. nämlich der Kurzschluß des Akkumulators und die Unterbrechung der Stromleitung im Akkumulator. In beiden Fällen bleibt die Versorgung des angeschlossenen Verbrauchers erhalten, weil der Widerstand 13 so bemessen ist, daß bei Kurzschluß des Akkumulators 22 der Spannungsabfall an ihm die minimale Betriebsspannung des Verbrauchers 26 bestimmt. bzw. weil bei Unterbrechung des Akkumulators 22 die Stabilisator-Diode die maximale Betriebsspannung des Verbrauchers 26 begrenzt.

Unabhängig von der als Spannungsstabilisator dienenden Diode 9 in Fig. 1, die auch bei der Schaltung nach Fig.2 eingesetzt ist. liegt der Kondensator 31 im Ausgang des hochohmigen Anpassungsnetzwerks 2a (Bauelemente 3 bis 5) und der Gleichrichterbrücke 6 in Fig.3 mit zweiter Schaltungsgruppe 23 mit dem einen der beiden parallelen Pfade (mit Vorwiderstand 13 und NiCd-Zelle 22), also dem Langzeit-Speicher einerseits und dem anderen der beiden parallelen Pfade mit dem Kondensator 16 als Kurzzeit-Speicher andererseits.

Wenn bei der Schaltung gemäß Fig.2 mit dem Anschluß des Verbrauchers, zB. einem elektronischen Analog- bzw. Digitaluhren-Schaltkreis 26, ein Relais mit üblichem Betrieb im Ausgang einer Leistungsstufe eingesetzt wird. dann muß normalerweise eine Verlustleistung in Kauf genommen werden. die zu einer Erwärmung von Schaltungsteilen führt. die störend ist. In Verbindung mit den vorbeschriebenen Schaltungen zur Überbrückung eines Ausfalls der primären Energieversorgung ergibt sich aber die Möglichkeit. ein solches Relais so einzusetzen, daß diese Schaltung durch das Relais 46 mit parallel geschalteter Diode 48 und eine Elektronik-Baugruppe 39 mit den Transistoren 40 und 41 erweitert wird.

An den Ausgangsklemmen 42, 43 ist der Verbraucher 26 (vgl. oben), zB. ein elektronischer Uhrenschaltkreis, wie vorher angeschlossen, aber wegen der Stromkonstanz-Eigenschaft des hochohmigen Anpassungsnetzwerks 2a wird keine nennenswerte Verlustleistung verbraucht, weil an dem Relais nur im eingeschalteten Zustand eine Spannung abfällt; im kurzgeschlossenen Zustand kann dagegen kein Leistungsverbrauch auftreten und sich die Leistungsbilanz im hochohmigen Anpassungsnetzwerk 2a nicht ändern.

Die Basis 44 des Transistors 40 ist nämlich über den Widerstand 45 mit dem Pluspol 7 verbunden, so daß der Transistor 40 in den leitenden Zustand versetzt ist, wobei die Relaisspule praktisch kurzgeschlossen wird, wenn der Transistor 41 sperrt, und am Emitter 47 die volle Versorgungsspannung am Ausgang 42 liegt, die NiCd-Zelle 22 mit Vorwiderstand 13 den vollen Ladestrom erhält und der als Kurzzeit-Speicher wirkende Kondensator 16 mit Spannung versorgt wird. Fällt die Speisespannung aus, dann wird die Ladung der NiCd-Zelle 22 unterbrochen und der Verbraucher 26 wird aus dem Kondensator 16 und aus der NiCd-Zelle 22 über den Widerstand 13 versorgt, bis während dieses Gangreserve-Betriebs an der Anschlußklemme 7 die Netzspannung zurückkehrt.

In allen vorbeschriebenen Störungsfällen haben die angegebenen Schaltungen den Vorteil, daß der Netzbetrieb eines elektrischen bzw. elektronischen Analog- bzw. Digital-Uhrenschaltkreises, wie allgemein jedes Regel- und Steuergeräts, auch bei defekter zweiter Energiequelle, zB. defektem Akkumulator, möglich ist. Bei einer entsprechend ergänzten Schaltuhr, zB. nach Fig.3, kommt der weitere Vorteil dazu, daß sich die Verlustleistung und der Aufwand der eigentlichen Energiespeicher-Anordnung minimieren läßt.

## Ansprüche

1. Schaltungseinrichtung mit einer ersten Schaltungsgruppe (2), die an ein Wechselstromnetz (1, 1') angeschlossen ist und deren Ausgangskreis (7, 8) eine Gleichrichter-Anordnung (6) und einen Energiespeicher für eine erste Energiequelle (2') enthält, die einer Schaltungsgruppe zur Energieversorgung für zwingend kontinuierlich mit Gleichstrom zu speisende elektrische bzw. elektronische Analog- bzw. Digital-Uhren-Schaltkreise (26) zugeordnet ist,
deren Stromversorgung aus der ersten Energiequelle (2') bei deren Ausfall durch eine zweite Energiequelle (14) aus einem zweiten Energiespeicher ersetzt wird, wobei die beiden Energiespeicher in zwei parallelen Pfaden in einer zweiten Schaltungsgruppe (23) enthalten sind, dadurch gekennzeichnet,
daß die Schaltungsgruppe (23) zu drei parallelen Zweigen zusammengefaßt ist,
deren erster Zweig mit einer Spannungs-Stabilisierungs-Einrichtung (9) bestückt ist,
deren zweiter Zweig als erste Energiequelle einen Langzeit-Energiespeicher (15) großer Kapazität mit einem Widerstand (13) in Serie enthält
und deren dritter Zweig durch einen Energiespeicher kleiner Kapazität (16) - Kurzzeitspeicher - gebildet wird,
wobei der Uhren-Schaltkreis (26) parallel zu dieser Schaltungsgruppe (23) angeordnet,
sowie zwischen dem Wechselstromnetz (1, 1') einerseits und Gleichrichter-Anordnung (6) der ersten Schaltungsgruppe (2) vorgeschaltet, andererseits, ein hochohmiges Anpassungs-Netzwerk (2a), bestehend aus Kondensator (3) und den Widerständen (4, 5), vorgesehen ist,
so daß der Betrieb des Uhren-Schaltkreises (26) gegen einen Ausfall der ersten Energiequelle (2') durch deren Ersatz durch die zweite Energiequelle (14) gesichert ist.

2. Schaltungs-Einrichtung nach Anspruch 1, dadurch gekennzeichnet, daß der Kurzzeit-Speicher einen Kondensator (16) kleiner Kapazität und der Langzeit-Speicher einen Kondensator (14a) großer Kapazität enthalten.

3. Schaltungs-Einrichtung nach Anspruch 1, dadurch gekennzeichnet, daß der Kurzzeit-Speicher einen Kondensator (16) kleiner Kapazität und der Langzeit-Speicher einen Akkumulator (22) enthalten.

4. Schaltungs-Einrichtung nach Anspruch 1, dadurch gekennzeichnet, daß zwischen der an das hochohmige Anpassungs-Netzwerk (2a) angeschlossenen Gleichrichtergruppe (6) einerseits und der zweiten Energiequelle (14) in der zweiten Schaltungsgruppe (23) andererseits eine Relaisspule (46) angeschlossen ist mit parallel dazu einer in Sperr-Richtung geschalteten Diode (48) und einer Elektronik-Baugruppe (39), wozu ein steuerbarer erster NPN-Transistors (40) gehört, an dessen Basis (44) der von einem Widerstand (45) beaufschlagte Kollektor (45a) eines zweiten NPN-Transistors (41) angeschlossen ist, dessen Basis (41a) über den Widerstand (38) von einem Ausgangssignal (24) des im Verbraucherkreis liegenden elektronischen Analog- bzw. Digital-Uhren-Schaltkreises (26) beaufschlagt ist.

A)

FIG. 3

FIG. 2

FIG.1

Analog- bzw. Digitaluhr

Langzeit-Energiespeicher 15

Kurzzeit-Energiespeicher 14

Verbraucher zu 1 - 3

zu 1 - 3

B)

FIG. 3

FIG. 2

FIG. 1